# EUROPEAN PATENT APPLICATION

(11) **EP 4 790 086 A1**
(43) Date of publication of application: **12.08.2026**
(21) Application number: 25382116.9
(22) Date of filing: 11.02.2025
(51) Int. Cl.: C08J 11/08

(54) **PROCESS FOR THE CHEMICAL SEPARATION OF A TEXTILE BLEND**

(71) Applicant: Fundación Tecnalia Research & Innovation, 48160 Derio - Bizkaia (ES)
(72) Inventor: SAGREDO ACITORES, Marta, 20009 SAN SEBASTIAN (ES); SANTOS MORENO, Sergio, 20009 SAN SEBASTIAN (ES); FERNÁNDEZ ARMENTIA, María, 20009 SAN SEBASTIAN (ES); SÁNCHEZ CUPIDO, Laura, 20009 SAN SEBASTIAN (ES)
(74) Representative: ZBM Patents - Zea, Barlocci & Markvardsen

(57) **Abstract**

A process for the chemical separation of a textile blend, the process comprising a) providing a feedstock of a textile blend comprising i) at least two synthetic fibers, or ii) a synthetic fiber and a cellulosic fiber; b) adding an alkyl phosphonium ionic liquid to the feedstock of the textile blend to obtain a mixture, and heating the mixture to selectively dissolve one of the fibers to obtain a fiber component solution and an undissolved fiber; c) separating the undissolved fiber by filtration; and d) treating the fiber component solution with an anti-solvent to obtain a precipitated fiber component; e) and collecting the precipitated fiber component; wherein the alkyl phosphonium ionic liquid is an organic salt of an alkyl phosphonium cation and an anion of an organic or an inorganic acid, the alkyl phosphonium ionic liquid having a Formula (I)

P(R¹)₃(R²)⁺ X⁻

wherein R¹ is a lineal C6-C16 alkyl, R² is a lineal C2-C6 alkyl, and X is the anion. The process can further comprise transforming the fiber components recovered either by filtration or by precipitation into a new fiber and the manufacture of a textile with the new fiber or, alternatively, into a film for packaging and/or wrapping.

## Description

### Technical Field

The present invention relates to the field of textile recycling. Particularly, it relate to processes for the selectively separation of the different kind of fibers in a textile waste comprising blended fibers.

### Background Art

In the manufacture of clothing and other textile products, large volumes of textile wastes are produced annually. Disposal of textile waste represents a substantial and challenging problem for the apparel industry and a serious environmental issue, with a significant portion of both pre-consumer and post-consumer textiles ending up in landfills or incinerators. Textiles are commonly made from intimate blends of several types of fibers, which makes recycling very difficult.

The most common blend used in clothing is a polyester/cotton blend. Traditionally, in order to recover the solid cotton in cotton/polyester blend fabrics, dilute acid mixtures and/or organic solvents have been used to selectively dissolve either polyester or cotton and recover the other component by filtration.

Ionic liquids (ILs) have been recently being pointed out as non-toxic solvents for the chemical selective selectively separation of polyester/cotton blends (cf. De Silva, R. et al. (2014). "Recycling textiles: the use of ionic liquids in the separation of cotton polyester blends". RSC Adv., 4(55), 29094-29098; Xia, G. et al. (2021). "Complete recycling and valorization of waste textiles for value-added transparent films via an ionic liquid". Journal of Environmental Chemical Engineering. 9(5), 106182; Villalta, E. et al. (2022). "Recovery of Cellulose from Polyester/Cotton Fabrics Making Use of Ionic Liquids". Polymer Science: Peer Review Journal. 4(3), 1-9.

Known ILs used to selectively dissolve cotton in cotton/polyester blends are based on imidazoles. However, on one hand, imidazoles are toxic and expensive, and, on the other hand they are limited to the recycling of cotton/polyester blends.

Elastane, used in both synthetic textiles (e.g., polyester) and natural textiles (e.g., cotton), typically presents problems in recycling processes. The presence of other synthetic fibers, such as polyamides or others, can further complicate recycling efforts. Various methods have been developed to address these challenges. For instance, some techniques remove elastane from synthetic textiles using controlled thermal degradation in inert environments, followed by solvent washing. Others use chemical treatments combining amines, polar solvents, and heat to break down elastane in cellulose-based textiles, though such methods can have undesirable effects.

Therefore, the industry continues to seek environmentally friendly and efficient solutions for chemically recycling textiles.

### Summary of Invention

The inventors have developed a process that allows recovering different fibers from blended textiles or mixtures of textiles by selectively dissolution of different textile fibers.

Particularly, the use of some specific alkyl phosphonium ionic liquids allows the selective dissolution and separation of the different polymers comprised in textile blends. Thus, by combining the reaction conditions and the specific alkyl phosphonium ionic liquids, the separation of textile fibers of really complex textile blends can be achieved.

Therefore, an aspect of the present invention relates to a process for the chemical separation of a textile blend, the process comprising:
a) providing a feedstock of a textile blend comprising:
   - at least two synthetic fibers, or
   - a synthetic fiber and a cellulosic fiber;
b) adding an alkyl phosphonium ionic liquid to the feedstock of the textile blend to obtain a mixture, and heating the mixture to selectively dissolve one of the fibers to obtain a fiber component solution and an undissolved fiber;
c) separating the undissolved fiber by filtration; and
d) treating the fiber component solution with an anti-solvent to obtain a precipitated fiber component;
e) and collecting the precipitated fiber component;
wherein the alkyl phosphonium ionic liquid is an organic salt of an alkyl phosphonium cation and an anion of an organic or an inorganic acid, the alkyl phosphonium ionic liquid having a Formula (I)

P(R¹)₃(R²)⁺ X⁻ (I)

wherein R¹ is a lineal C6-C16 alkyl, R² is a lineal C2-C6 alkyl, and X is the anion.

Advantageously, the process of the invention allows separating and recovering the different fibers present in a great variety of complex textile blends with a surprisingly high separation efficiency without the need of using any organic solvent as co-solvent. By selectively dissolving the desired fiber, the non-dissolved fiber can be easily collected by simple filtration, while the dissolved fiber can be easily precipitated with cheap and widely available non-toxic anti-solvents such as ethanol, isopropanol, or even water.

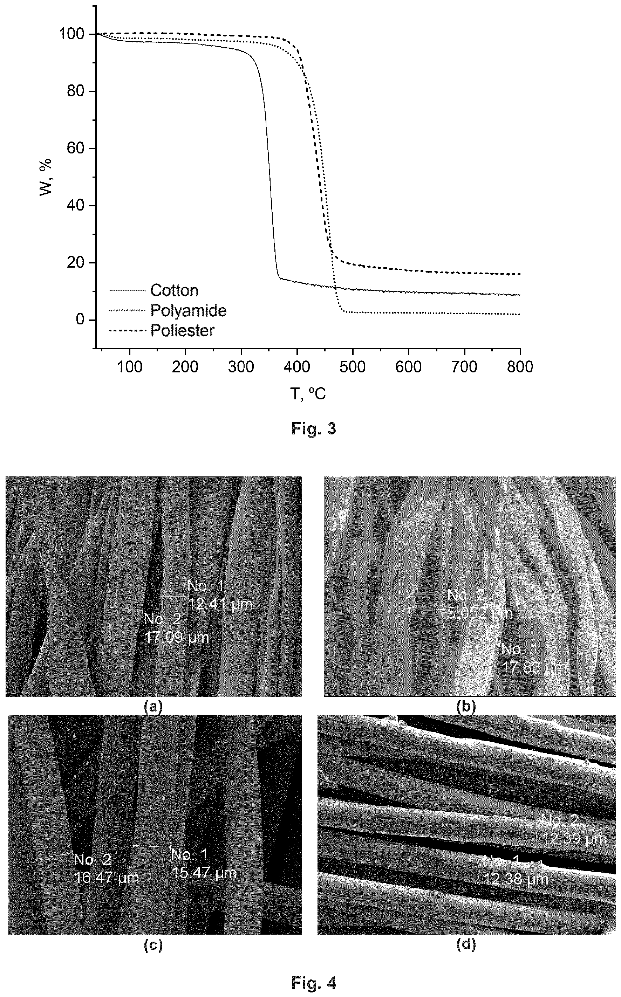

Also unexpectedly, as can be seen in Fig. 4, the selective dissolution process does not affect the structure and quality of the fiber that remains undissolved, which can be reused without the need of any pre-treatment after being collected it by filtration of the solution containing the other selectively dissolved component. (see Fig. 4)

In addition, the different fibers recovered by the process of the present disclosure have the required mechanical and physico-chemical properties to be processed into a recycled material, including films or fibers of the recycled material.

Also advantageously, the alkyl phosphonium ionic liquids used in the process of the invention are relatively inexpensive and non-toxic, and can be easily recovered and recycled after being used in the process of the invention.

Finally, the process of the invention is easily scalable and therefore allows the industrialization of the technology.

### Brief Description of Drawings

Fig. 1 shows IR absorbance spectra of cotton (black), polyester (blue), polyamide (green) and elastane (orange). A: absorbance; λ: wavenumber.
Fig. 2 shows the spectrum of the solid obtained in Example 6.
Fig. 3 shows the thermogravimetric analysis of the different possible components in a textile blend (cotton, polyester, polyamide, and elastane) in their pure forms.
Fig. 4 shows the SEM micrographs of (a) pure cotton, (b) cotton recovered by the selective dissolution processes, (c) pure polyester, and (f) polyester recovered in the selective dissolution process.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As used herein, the term "textile blend" of "blended textile" refers both to a textile material comprising blended polymer fibers and to a mixture of textile materials. Textile blend can be a textile waste both of pre-consumer textiles and of post-consumer textile.

As used herein, the term "separation efficiency" of a fiber is a two-step validation system to evaluate the purification of one or more fibers in relation to the other(s) that are initially present in a textile blend.

Binary textile blends (X%A-Y%B): After the dissolution process, a first analysis is carried out to determine the purity of the isolated solid fiber. When dissolving A, the obtained solid must be 100% B. If there is still a remanent of A in the obtained solid, the validation test is not passed. If the obtained solid is 100% B, the separation efficiency is calculated based on the amount of solid by following the following equation: $Separation efficiency \left(%\right) = \frac{{m}_{r}}{Y% ∗ {m}_{T}} ∗ 100$ mᵣ = mass (g) of the obtained solid; Y% = weight percentage of B in the initial textile blend; m_{T} = total mass (g) of the initial textile blend.

Multicomponent textile blends (X%A-Y%B-Z%C): After the dissolution process, a first analysis is carried out to determine the purity of the isolated solid fiber. When dissolving A, the obtained solid must be a mixture of just B and C. If there is still a remanent of A in the obtained solid, the validation test is not passed. If the obtained solid just contains B and C, the separation efficiency is calculated based on the amount of solid by following the following equation: $Separation efficiency \left(%\right) = \frac{{m}_{r}}{\left(Y%+Z%\right) ∗ {m}_{T}} ∗ 100$ mᵣ = mass (g) of the obtained solid; Y% = weight percentage of B in the initial textile blend; Z% = weight percentage of C in the initial textile blend; m_{T} = total mass (g) of the initial textile blend.

The term "room temperature" refers to a temperature from 15 °C to 25 °C.

As used herein, the indefinite articles "a" and "an" are synonymous with "at least one" or "one or more." Unless indicated otherwise, definite articles used herein, such as "the" also include the plural of the noun.

As mentioned above, an aspect of the invention relates to a process for the chemical separation of a textile blend, the process comprising a) providing a feedstock of a textile blend comprising at least two synthetic fibers, or a synthetic fiber and a cellulosic fiber; b) adding an alkyl phosphonium ionic liquid of Formula (I) as defined above to the feedstock of the textile blend to obtain a mixture, and heating the mixture to selectively dissolve one of the fibers to obtain a fiber component solution and an undissolved fiber; c) separating the undissolved fiber by filtration; d) treating the fiber component solution with an anti-solvent (particularly, water or ethanol) to obtain a precipitated fiber component; e) and collecting the precipitated fiber component. The precipitated fiber component can be collected by filtration.

In the alkyl phosphonium ionic liquid of Formula (I) defined above, the anion, X, in the alkyl phosphonium ionic liquid can be selected from the group consisting of halide (in particular fluoride, chloride, bromide, iodide), nitrate, nitrite, phosphinate, carboxylate, sulphonate, organosulphates, organosulfonates, hydride, cyanide, hydroxide, hypochlorite, hypobromite, hypoiodite, chlorite, bromite, iodite, hydrogen sulfite, chlorate, bromate, iodate, glycolate, perchlorate, perbromate, periodate, hydrogen carbonate, hydrogen sulfate, substituted sulfates, dihydrogen phosphate, substituted phosphates, phosphonates, carboxylates, permanganate, thiocyanate, tosylate, bistriflimide ([NTf2]⁻), hydrogen oxalate, hydrogen sulfide, amides, substituted amides, and combinations thereof.

In an embodiment, the anion is selected from selected from chloride, bromide, hydroxide, tosylate, dodecylsulfonate, dodecylbenzenesulfonate, glycolate, dicyanamide, methylsulfate, diethylphosphate, hexafluorophosphate, phosphinate, bistriflimide, tetrafluoroborate, and a carboxylate with the general structure RCOO- where R is an aliphatic alkyl chain with a carbon chain length from 1-14, such as acetate or decanoate.

In another embodiment, the alkyl phosphonium cation is trihexyl(tetradecyl)phosphonium [P66614]⁺.

In a particular embodiment, the alkyl phosphonium ionic liquids is selected from the group consisting of [P66614]chloride (Cyphos 101), [P66614]decanoate (Cyphos 103), [P66614]dodecylbenzenesulfonate, [P66614]bis(2,4,4-trimethylpentyl)phosphinate (Cyphos 104), P66614]bis(trifluoromethylsulfonyl)amide, and [P66614]hexafluorophosphate.

In a more particular embodiment, the alkyl phosphonium ionic liquids is selected from the group consisting of Cyphos 101, Cyphos 103, and Cyphos 104:

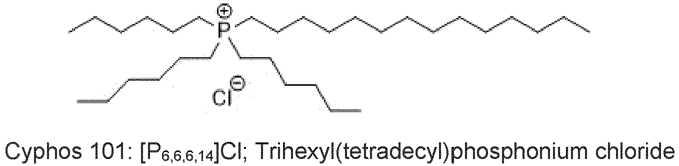

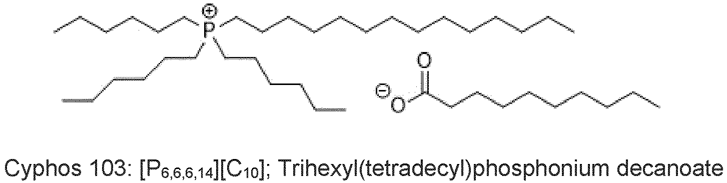

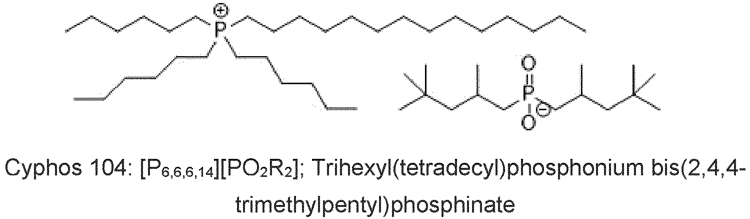

As an instance, Cyphos 101 is able to dissolve completely and selectively polyamide at 140 °C for 1 h, while it is able to dissolve selectively cotton at 150°C for 24h.

As an instance, Cyphos 103 is able to dissolve completely and selectively polyester at 170 °C for 24 h, while it is able to dissolve selectively polyamide at 170°C for 24h.

As an instance, Cyphos 104 is able to dissolve elastane completely and selectively at 150 °C for 24 h.

In an embodiment, optionally in combination with one or more features of the various embodiments described above, the alkyl phosphonium ionic liquid is added to the textile waste in an amount from 80 wt.% to 99 wt.%, particularly from 90 wt.% to 99 wt.%, related to a total amount of textile waste and alkyl phosphonium ionic liquid. That is, in an amount such that the percentage of textile waste is from 1 wt.% to 20 wt.%, particularly from 1 wt.% to 10 wt.%, related to a total amount of textile waste and alkyl phosphonium ionic liquid.

As mentioned above, the process of the present disclosure can be carried out without the need of using any organic solvent as co-solvent. Thus, in an embodiment, optionally in combination with one or more features of the various embodiments described above, the process is carried out in the absence of an organic solvent.

To perform the above-mentioned chemical separation, there is no need to carry our any pre-treatment step of the textile blend, although it can be optionally carried out.

In an embodiment, optionally in combination with one or more features of the various embodiments described above, the process is carried out without carrying out a pre-treatment step.

As mentioned above, the process of the invention allows separating and recovering the different fibers in a great variety of complex textile blends.

Particularly, the fibers in the textile blend can be in different proportions. As an instance, in a textile binary blend, i.e., a textile comprising two fibers, one of the fibers can be in an amount from 90 wt.% to 10 wt.%, the other fiber being in an amount such that the total fibers are 100 wt.%.

In an embodiment, the cellulosic fiber is selected from the group consisting of cotton, hemp, linen, rayon (such as viscose or lyocell), and any combination thereof, particularly cotton.

In another embodiment, the synthetic fiber is selected from the group consisting of polyester, polyamide, elastane, and acrylic.

Example of polyamide include, without being limited to, PA 6, PA 6,6, PA 6,10, PA 11, and PA 10,10.

In an embodiment, the textile blend comprises a cellulosic fiber and a synthetic fiber. Particularly, the cellulosic fiber is cotton and the synthetic fiber is selected from the group consisting of a polyester, a polyamide, and elastane.

In another embodiment, the fiber dissolved in step b) is the cellulosic fiber.

In step b) of the process of the present disclosure, the heating of the mixture can be carried out at the temperature required to selectively dissolve one of the fibers (i.e., the fiber of interest or target fiber).

Thus, in an embodiment, the step b) is carried out at a temperature at a temperature higher than 100 °C, such as from 140 to 170 °C. [claim 15]

Particularly, the heating can be carried out for the period of time needed to completely dissolve the fiber of interest without significantly dissolving any other one of the fibers present in the textile. The term "without significantly dissolving" referred to any other one of the fibers present in the textile means that any other fiber can be present in the recovered fiber in an amount lower than 0.1 wt.%, for example, lower than 0.05 wt.%. The time will depend on the specific alkyl phosphonium ionic liquid and temperature used and can be from less than 1 h (such as 30 or 40 min) to 24 h or more. In the context of the present disclosure, the term "selectively dissolved", referring to one of the fibers in relation to other fibers present in the textile blend, is understood to mean that at least from 95 wt.% to 100 wt.%, such as a 98 wt.%, of the one of the fibers is dissolved, while the other fibers present in the textile are dissolved in an amount from 0 wt.% to 5 wt.% of each other fiber, such as a 2 wt.% or less, preferably in an amount lower than 0.1 wt.%, for example, lower than 0.05 wt.%.

Besides, Step b) can be carried out under stirring to facilitate the dissolution of the fiber of interest.

Thus, in a particular embodiment, optionally in combination with one or more features of the various embodiments described above, step b) is carried out under stirring for 0.5 to 30 hours, such as for 1 to 24 hours. Any suitable stirring mean such as with a mechanical stirrer can be used. Stirring can be carried out at a speed from 100 to 400 rpm.

In an example, the process can further comprise a pre-treatment step, such as a step to reduce the molecular weight of a fiber or a bleaching step. Any suitable known pre-treatment step may be used.

As an instance, when the textile blend comprises a synthetic fiber and a cellulosic fiber, an acid hydrolysis or enzymatic hydrolysis step to reduce the molecular weight of cellulosic fiber (to facilitate the dissolution of the cellulosic fiber). When an acid hydrolysis or enzymatic hydrolysis pre-treatment step is carried out, the temperature and times needed to dissolve the cellulosic fiber can be reduced.

Thus, in an embodiment, the textile blend comprises a cellulosic fiber and a synthetic fiber the process further comprises a pre-treatment step of acid hydrolysis or enzymatic hydrolysis, and step b) is carried out at a temperature lower that 140 °C, such as from 100 °C to 60 °C, optionally under stirring, for 0,5 to 24 h, particularly for 0.5 to 5 hours or less.

In another particular embodiment, the textile blend comprises a cellulosic fiber such as cotton and no pre-treatment step (particularly, no hydrolysing step) is carried out. In an even more particular embodiment, the textile blend comprises polyester and a cellulosic fiber (e.g., the textile blend can be polycotton, a mixture of polyester and cotton) and no hydrolysing step is carried out.

In a particular embodiment, the textile blend comprises cotton and polyester, the alkyl phosphonium ionic liquid is [P66614]chloride (Cyphos 101), the precipitated fiber component is cotton, and the undissolved fiber is polyester.

In another particular embodiment, the textile blend comprises cotton and polyester, the alkyl phosphonium ionic liquid is [P66614]decanoate (Cyphos 103), the precipitated fiber component is polyester, and the undissolved fiber is cotton.

In another particular embodiment, the textile blend comprises cotton and elastane, the alkyl phosphonium ionic liquid is [P66614]bis(2,4,4-trimethylpentyl)phosphinate (Cyphos 104), the precipitated fiber component is elastane, and the undissolved fiber is cotton.

In another particular embodiment, the textile blend comprises cotton and polyamide, the alkyl phosphonium ionic liquid is [P66614]chloride (Cyphos 101), the precipitated fiber component is polyamide, and the undissolved fiber is cotton.

In another particular embodiment, the textile blend comprises cotton and polyamide, the alkyl phosphonium ionic liquid is [P66614]decanoate (Cyphos 103), the precipitated fiber component is polyamide, and the undissolved fiber is cotton.

In another particular embodiment, the textile blend comprises cotton, polyamide and elastane, the alkyl phosphonium ionic liquid is [P66614]bis(2,4,4-trimethylpentyl)phosphinate (Cyphos 104), the precipitated fiber component is elastane, and the undissolved fibers are cotton and polyamide. Particularly, the undissolved cotton and polyamide are chemically separated as disclosed herein above.

In another particular embodiment, the textile blend comprises cotton, polyester and elastane, the alkyl phosphonium ionic liquid is [P66614]bis(2,4,4-trimethylpentyl)phosphinate (Cyphos 104), the precipitated fiber component is elastane, and the undissolved fibers are cotton and polyester. Particularly, the undissolved cotton and polyester are chemically separated as disclosed herein above .

In another particular embodiment, the textile blend comprises cotton, polyester, polyamide, and elastane, the alkyl phosphonium ionic liquid is [P66614]bis(2,4,4-trimethylpentyl)phosphinate (Cyphos 104), the precipitated fiber component is elastane, and the undissolved fibers are cotton, polyester and polyamide. Particularly, the undissolved cotton, polyester, and polyamide are chemically separated by
- adding [P66614]chloride (Cyphos 101) and heating, for instance, at a temperature from 100 °C to 170 °C under stirring for 0.5 to 30 hours, to obtain a polyamide-containing solution and an undissolved mixture of cotton and polyester;
- separating the undissolved mixture of cotton and polyester by filtration:
- treating the polyamide-containing solution with an anti-solvent to recover a precipitated polyamide fiber;
- chemically separating the undissolved mixture of cotton and polyester by carrying out the process disclosed herein above.

In another embodiment, the textile blend comprises at least two synthetic fibers selected from the group consisting of a polyester fiber, a polyamide fiber, and elastane.

In a particular embodiment, the textile blend comprises polyester and elastane, the alkyl phosphonium ionic liquid is [P66614]bis(2,4,4-trimethylpentyl)phosphinate (Cyphos 104), the precipitated fiber component is elastane, and the undissolved fiber is polyester.

In another particular embodiment, the textile blend comprises polyamide and elastane, the alkyl phosphonium ionic liquid is [P66614]bis(2,4,4-trimethylpentyl)phosphinate (Cyphos 104), the precipitated fiber component is elastane, and the undissolved fiber is polyamide.

In another particular embodiment, the textile blend comprises polyester and polyamide, the alkyl phosphonium ionic liquid is [P66614]chloride (Cyphos 101), the precipitated fiber component is polyamide, and the undissolved fiber is polyester.

In another particular embodiment, the textile blend comprises polyester, polyamide and elastane, the alkyl phosphonium ionic liquid is [P66614]bis(2,4,4-trimethylpentyl)phosphinate (Cyphos 104), the precipitated fiber component is elastane, and the undissolved fibers are polyester and polyamide. Particularly, the undissolved polyester and polyamide are chemically separated as disclosed herein above.

The ionic liquids can be recovered by simple distillation (if ethanol was used as anti-solvent) or by decantation (if water was used as anti-solvent), as well as the fibers dissolved by them by simple re-precipitation by addition of a benign solvent such as ethanol, isopropanol or water.

Therefore, the process of the invention allows recovering the fiber components of textile blends in high yields and with high efficiency. The recovered fiber components can be regenerated into various forms.

By way of example, the cellulosic component obtained from cotton can be regenerated, for instance, in wet spinning to obtain fibers (e.g., to obtain Lyocell-type fibers) or melted to form films. Cellulose films generated from cellulose components show good thermal stability and great potential as films for packaging and wrapping. Cellulose fibers can also be used to manufacture new fabrics.

Also, by way of example, the recovered polyester component can be prepared into fibers, films, plastics, and so on, which is widely used in textiles, packaging, electronic appliances, and other fields. In particular, the PET fiber recovered with the process of the present disclosure can be recycled and reused in textiles again or fabricated into PET film.

In conclusion, by using the process of the present disclosure for complex textile blends such as of cotton, polyester, polyamide and/or elastane, the different fiber components can be recovered and later on transformed into some articles of manufacture such as films, new textiles and so on.

Thus, in an embodiment, the process of the present disclosure further comprises transforming the fiber components recovered either by filtration or by precipitation into a new fiber and the manufacture of a textile with the new fiber. This embodiment can also be defined as the use of the fiber components obtained by the process of the present disclosure for the manufacture of a textile.

In another embodiment, the process of the present disclosure further comprises transforming the fiber components recovered either by filtration or by precipitation into a film for packaging and/or wrapping. This embodiment can also be defined as the use of the fiber components obtained by the process of the present disclosure for the manufacture of a film for packaging and/or wrapping.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### Examples

### Example 1 - Selective dissolution of cotton in a cotton/polyester garment using Cyphos 101

1. 5 cm x 5 cm swatches of a textile binary blend composed of 50 wt.% cotton and 50 wt.% polyester were placed in a glass reactor.
2. In order to selectively dissolve cotton, Cyphos 101 was added to the textile waste in an amount such that the percentage of textile waste was 2 % w/w related to a total amount of textile waste and Cyphos 101.
3. The mixture was heated at a temperature of 150°C with magnetic or mechanical stirring for 24 h.
4. Then, the mixture was cooled to room temperature and the undissolved polyester was collected by filtration and washed with ethanol to give the pure polyester fiber.
5. The Cyphos 101 solution comprising the dissolved cotton was treated with ethanol to precipitate cotton, which was then collected by filtration. After washing the collected cotton with ethanol and drying it in an oven, pure cotton was obtained.
6. Cyphos 101 was regenerated by distillation for reuse in step 1 of the process.

### Example 2 - Selective dissolution of polyester in a cotton/polyester garment using Cyphos 103

1. 5 cm x 5 cm swatches of a textile binary blend composed of 50 wt.% cotton and 50 wt.% polyester were placed in a glass reactor
2. In order to selectively dissolve polyester, Cyphos 103 was added to the textile waste in an amount such that the percentage of textile waste was 2 % w/w related to a total amount of textile waste and Cyphos 103.
3. The mixture was heated to 170 °C under magnetic or mechanical stirring for 24 h.
4. Then, the mixture was cooled to room temperature, and the undissolved cotton was collected by filtration and washed with ethanol to give the pure fiber.
5. The Cyphos 103 solution comprising the dissolved polyester was treated with ethanol to precipitate polyester, which was then collected later by filtration. After washing the collected cotton with ethanol and drying it in an oven, pure polyester was obtained.
6. Cyphos 103 was regenerated by distillation for reuse in step 1 of the process.

### Example 3 - Selective dissolution of elastane in a cotton/elastane garment using Cyphos 104

1. 5 cm x 5 cm swatches of a textile binary blend composed of 92 wt.% cotton and 8 wt.% elastane was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated to 150 °C under magnetic or mechanical stirring for 24 h.
4. Then, the mixture was cooled to room temperature, and the undissolved cotton was collected by filtration and washed with ethanol to give pure cotton fiber.
5. The Cyphos 104 solution comprising the dissolved elastane was treated with ethanol to precipitate the elastane, which was then collected by filtration. After washing the collected elastane with ethanol and drying it in an oven, pure elastane was obtained.
6. Cyphos 104 was regenerated by distillation for reuse in step 1 of the process.

### Example 4 - Selective dissolution of elastane in a polyester/elastane garment using Cyphos 104

1. 5 cm x 5 cm swatches of a textile binary blend composed of 10 wt.% elastane and 90 wt.% polyester was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated at a temperature of 150 °C with magnetic or mechanical stirring for 24 h.
4. Then, the mixture was cooled to room temperature, and the undissolved polyester was collected by filtration and washed with ethanol to give the pure polyester fiber.
5. The Cyphos 104 solution comprising the dissolved elastane was treated with ethanol to precipitate elastane, which was then collected by filtration. After washing the collected elastane with ethanol and drying it in an oven, pure elastane was obtained.
6. Cyphos 104 was regenerated by distillation for reuse in step 1 of the process.

### Example 5 - Selective dissolution of elastane in a polyamide/elastane garment using Cyphos 104

1. 5 cm x 5 cm swatches of a textile binary blend composed of 20 wt.% elastane and 80 wt.% polyamide was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated at a temperature of 150 °C with magnetic or mechanical stirring for 24 h.
4. Then, the mixture was cooled to room temperature, and the undissolved polyamide was collected by filtration and washed with ethanol to give the pure polyamide fiber.
5. The Cyphos 104 solution comprising the dissolved elastane was treated with ethanol to precipitate elastane, which was then collected by filtration. After washing the collected elastane with ethanol and drying it in an oven, pure elastane was obtained.
6. Cyphos 104 was regenerated by distillation for reuse in step 1 of the process.

### Example 6 - Selective dissolution of polyamide in a cotton/polyamide garment using Cyphos 101

1. 5 cm x 5 cm swatches of a textile binary blend composed of 80 wt.% cotton and 20 wt.% polyamide was chosen as raw material.
2. In order to selectively dissolve polyamide, Cyphos 101 was added to the textile waste in an amount such that the percentage of textile waste was 2 % w/w related to a total amount of textile waste and Cyphos 101.
3. The mixture was heated to 140 °C under magnetic or mechanical stirring for less than 1 h.
4. Then, the mixture was cooled to room temperature, and the undissolved cotton was collected by filtration and washed with ethanol to give the pure fiber.
5. The Cyphos 101 solution comprising the dissolved polyamide was treated with ethanol to precipitate polyamide, which was then collected later by filtration. After washing the collected cotton with ethanol and drying it in an oven, pure polyamide was obtained.
6. Cyphos 101 was regenerated by distillation for reuse in step 1 of the process.

### Example 7 - Selective dissolution of polyamide in a cotton/polyamide garment using Cyphos 103

1. 5 cm x 5 cm swatches of a textile binary blend composed of 80 wt.% cotton and 20 wt.% polyamide in different proportions was chosen as raw material.
2. In order to selectively dissolve polyamide, Cyphos 103 was added to the textile waste in an amount such that the percentage of textile waste was 2 % w/w related to a total amount of textile waste and Cyphos 103.
3. The mixture was heated to 170 °C under magnetic or mechanical stirring for 24 h.
4. Then, the mixture was cooled to room temperature, and the undissolved cotton was collected by filtration and washed with ethanol to give the pure fiber.
5. The Cyphos 103 solution comprising the dissolved polyamide was treated with ethanol to precipitate polyamide, which was then collected later by filtration. After washing the collected cotton with ethanol and drying it in an oven, pure polyamide was obtained.
6. Cyphos 103 was regenerated by distillation for reuse in step 1 of the process.

### Example 8 - Selective dissolution of polyamide in a polyester/polyamide garment using Cyphos 101

1. 5 cm x 5 cm swatches of a textile binary blend composed of 50 wt.% polyester and 50 wt.% polyamide in different proportions was chosen as raw material.
2. In order to selectively dissolve polyamide, Cyphos 101 was added to the textile waste in an amount such that the percentage of textile waste was 2 % w/w related to a total amount of textile waste and Cyphos 101.
3. The mixture was heated to 140 °C under magnetic or mechanical stirring for 1 h.
4. Then, the mixture was cooled to room temperature, and the undissolved polyester was collected by filtration and washed with ethanol to give the pure fiber.
5. The Cyphos 101 solution comprising the dissolved polyamide was treated with ethanol to precipitate polyamide, which was then collected later by filtration. After washing the collected polyester with ethanol and drying it in an oven, pure polyamide was obtained.
6. Cyphos 101 was regenerated by distillation for reuse in step 1 of the process.

### Example 9 - Selective dissolution of elastane in a cotton/polyamide/elastane garment using Cyphos 104

1. 5 cm x 5 cm swatches of a textile binary blend composed of 40 wt.% cotton, 4 wt.% elastane, and 56 wt.% polyamide in different proportions was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated at a temperature of 150 °C with magnetic or mechanical stirring for 24 h.
4. Then, the mixture was cooled to room temperature, and the undissolved cotton and polyamide mixture was collected by filtration and washed with ethanol to give a binary mixture polyamide/cotton fiber (which can be separated by the method described in Examples 6 and 7).
5. The Cyphos 104 solution comprising the dissolved elastane was treated with ethanol to precipitate elastane, which was then collected by filtration. After washing the collected elastane with ethanol and drying it in an oven, pure elastane was obtained.
6. Cyphos 104 was regenerated by distillation for reuse in step 1 of the process.

### Example 10 - Selective dissolution of elastane in a polyester/polyamide/elastane garment using Cyphos 104

1. 5 cm x 5 cm swatches of a textile binary blend composed of 60 wt.% polyester, 8 wt.% elastane, and 32 wt.% polyamide in different proportions was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated at a temperature of 150 °C with magnetic or mechanical stirring for 24 h.
4. Then, the mixture was cooled to room temperature, and the undissolved polyester and polyamide mixture was collected by filtration and washed with ethanol to give a binary mixture polyamide/polyester fiber (which can be separated by the method described in Example 8).
5. The Cyphos 104 solution comprising the dissolved elastane was treated with ethanol to precipitate elastane, which was then collected by filtration. After washing the collected elastane with ethanol and drying it in an oven, pure elastane was obtained.
6. Cyphos 104 was regenerated by distillation for reuse in step 1 of the process.

### Example 11 - Selective dissolution of elastane in a cotton/polyester/elastane garment using Cyphos 104

1. 5 cm x 5 cm swatches of a textile binary blend composed of 60 wt.% cotton, 32 wt.% polyester, and 8 wt.% elastane in different proportions was chosen as raw material.
2. In order to selectively dissolve elastane, Cyphos 104 was added to the textile waste in an amount such that the percentage of textile waste was 2 % w/w related to a total amount of textile waste and Cyphos 104.
3. The mixture was heated at a temperature of 150 °C with magnetic or mechanical stirring for 24 h.
4. Then, the mixture was cooled to room temperature, and the undissolved cotton and polyester mixture was collected by filtration and washed with ethanol to give a binary mixture polyester/cotton fiber (which can be separated by the method described in Examples 1 and 2).
5. The Cyphos 104 solution comprising the dissolved elastane was treated with ethanol to precipitate elastane, which was then collected by filtration. After washing the collected elastane with ethanol and drying it in an oven, pure elastane was obtained.
6. Cyphos 104 was regenerated by distillation for reuse in step 1 of the process.

### Example 12 - Selective dissolution of elastane in a cotton/polyester/polyamide/ elastane garment

The separation of the different components of complex textile mixtures can be carried out without the need of carrying out a first classification of the garments according to their composition. Conversely, the recycling of complex textile mixtures can be carried out by treating them according to a combination of the procedures for selective dissolution with ionic liquids disclosed in Examples 1-11.

The separation of the four main components of a textile garment comprising cotton, polyester, polyamide, and elastane was carried out following the reaction conditions previously contemplated for binary and tertiary mixtures disclosed above. A first selective dissolution of the elastane was carried out using Cyphos 104 at 150 °C for 24 h. Subsequently, from the cotton/polyester/polyamide ternary mixture obtained, the selective dissolution of the polyamide was performed using Cyphos 101 at 140 °C for 1 h. Finally, the cotton/polyester binary mixture can be separated either with Cyphos 101 (150 °C, 24 h) to recover the solid polyester, or with Cyphos 103 (170 °C, 24 h) to recover the solid cotton.

### Results

The fibers were characterized by three different techniques: Infrared Spectroscopy (FTIR), Thermogravimetric analysis (TGA), and Scanning electron microscopy (SEM).

### FTIR

The equipment used for the identification of the characteristic peaks of the matrix was a Bruker FTIR spectrophotometer model ALPHA-P, equipped with the ATR Platinum accessory with a diamond crystal and a rebound that allows the analysis of all types of solid and liquid samples without sample preparation. The equipment has a spectral range of 7500-375 cm⁻¹ and a standard spectral resolution better than 2 cm⁻¹.

This technique allowed to observe qualitatively the functional group of the different components of a textile blend, differentiating cotton, polyester, polyamide and elastane. This was useful as a first screening that the selective dissolution processes had been carried out at least until one of the blends become undetectable by the technique.

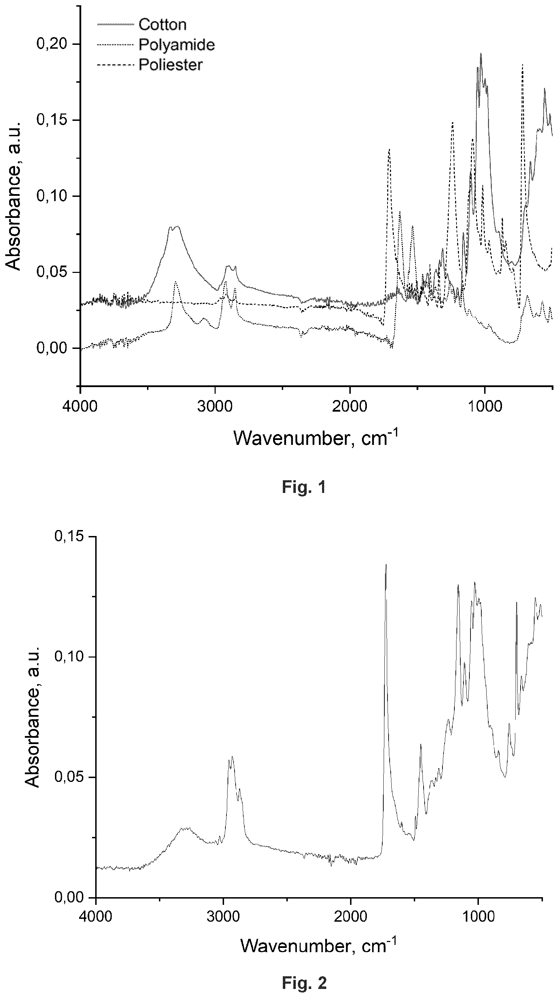

As shown in Fig. 1, the IR absorbance spectra allow differentiating the different pure components due to the distinguishing absorptions of the different functional groups present in them:
- cotton: absorbance between 3000-3500 cm⁻¹ due to hydroxyl groups;
- polyester: absorbance at 1710 cm⁻¹ due to the ester group;
- polyamide: absorbance at 1535 cm⁻¹ and 1630 cm-1 due to the amide group;
- elastane: absorbance at 1535 cm⁻¹ and 895 cm⁻¹ due to the amide group and the mobile moiety of elastane, respectively.

Thanks to these differences, it is possible to determine qualitatively the presence or absence of some of the compounds present in the initial sample in order to perform the required selective dissolution process on them.

Table 1 shows the results of the component dissolved after the addition of the alkyl phosphonium ionic liquid and the undissolved components obtained after the filtration of the solution in of Examples 1-12.

**Table 1**

| Example | Mixture | Solvent | Conditions | Dissolved | Undissolved |
|---|---|---|---|---|---|
| #1 | C/PE | Cyphos 101 | 150 °C, 24 h | C | PE |
| #2 | C/PE | Cyphos 103 | 170 °C, 24 h | PE | C |
| #3 | C/E | Cyphos 104 | 150 °C, 24 h | E | C |
| #4 | PE/E | Cyphos 104 | 150 °C, 24 h | E | PE |
| #5 | PA/E | Cyphos 104 | 150 °C, 24 h | E | PA |
| #6 | C/PA | Cyphos 101 | 140 °C, <1 h | PA | C |
| #7 | C/PA | Cyphos 103 | 170 °C, 24 h | PA | C |
| #8 | PE/PA | Cyphos 101 | 140 °C, 1 h | PA | PE |
| #9 | C/PA/E | Cyphos 104 | 150 °C, 24 h | E | C/PA |
| #10 | PE/PA/E | Cyphos 104 | 150 °C, 24 h | E | PE/PA |
| #11 | C/PE/E | Cyphos 104 | 150 °C, 24 h | E | C/PE |
| #12 | C/PE/PA/E | Cyphos 104 | 150 °C, 24 h | E | C/PE/PA |

| | | | | | |
|---|---|---|---|---|---|
| C: cotton; PE: polyester; E: elastane; PA: polyamide | | | | | |

It can be seen how, in the case of binary mixtures, the solid remaining from the selective dissolution process is isolated from the component that has been dissolved, with the exception of Example 6.

### TGA

The equipment used to determine the characteristic mass loss of each of the pure compounds and to determine the composition of each polymer in the blended garments was a Mettler Toledo TGA/DSC 1 STARe System thermobalance. Approximately 10 mg of sample was used for thermogravimetric analysis, with heating from room temperature to 800 °C, ramped at 10 °C/min under constant N₂ flow. The mass loss as a function of temperature is continuously monitored. The temperature at which each sample undergoes a higher rate of decomposition was determined by the first derivative of the thermogravimetric curve.

Those selective separation processes in which infrared spectroscopy suggested that no dissolved compound was present were quantitatively characterized by TGA to accurately determine the presence or absence of any component in the mixture based on its different decomposition temperatures.

Fig. 2 show that, in Example 6, in addition to the presence of the polyamide, there is also some cotton remaining). Thus, it becomes crucial to perform thermogravimetry analysis to quantify the presence or absence of the components that cannot be completely confirmed with an analysis by IR spectroscopy.

Thermogravimetry shows that the different possible components of a textile mixture have decomposition temperatures different enough to be able to distinguish the different components in a mixture when a dynamic temperature program is performed on them (Fig. 2). Cotton is the polymeric material that decomposes most easily, starting to decompose at around 330 °C, followed by elastane, which decomposes in a two-stage process. Polyester is decomposed before reaching 400 °C, while polyamide is the most thermally resistant polymer, withstanding up to about 410 °C. In addition to the differentiation in decomposition temperatures and given that the technique makes use of a microbalance, the proportion of the component that is decomposed can be quantitatively determined, i.e., the presence and the amount of any of the four compounds present in the complex mixture can be determined. This allows determining the separation efficiency in the different selective dissolution examples.

Table 2 shows the separation efficiency of the components present in the initial textile samples.

**Table 2**

| Example | Mixture | Solvent | Conditions | Separation efficiency |
|---|---|---|---|---|
| #1 | C/PE | Cyphos 101 | 150 °C, 24 h | 100% |
| #2 | C/PE | Cyphos 103 | 170 °C, 24 h | 100% |
| #3 | C/E | Cyphos 104 | 150 °C, 24 h | 100% |
| #4 | PE/E | Cyphos 104 | 150 °C, 24 h | 100% |
| #5 | PA/E | Cyphos 104 | 150 °C, 24 h | 100% |
| #6 | C/PA | Cyphos 101 | 140 °C, <1 h | >89% |
| #7 | C/PA | Cyphos 103 | 170 °C, 24 h | 97% |
| #8 | PE/PA | Cyphos 101 | 140 °C, 1 h | 95% |
| #9 | C/PA/E | Cyphos 104 | 150 °C, 24 h | 100% |
| #10 | PE/PA/E | Cyphos 104 | 150 °C, 24 h | 100% |
| #11 | C/PE/E | Cyphos 104 | 150 °C, 24 h | 100% |

| | | | | |
|---|---|---|---|---|
| C: cotton; PE: polyester; E: elastane; PA: polyamide | | | | |

A thermogravimetric analysis of the solid remaining from the selective dissolution was carried out to determine the presence or absence of the compounds that should have been selectively dissolved. The results shows that a quantitative separation of the components in the textile mixtures was achieved in most of the examples, especially in the cotton/polyester mixtures, and in those in which elastane was present and the process involve its selective dissolution with Cyphos 104, in which a 100% separation was achieved.

In textiles mixtures comprising polyamide and either cotton or polyester, an extraordinary separation efficiency was achieved, even though it did not reach 100% (a very small amount of the component to be dissolved was present in the undissolved component).

### SEM

In order to evaluate the geometry of the fiber that has remained undissolved in the processes, scanning electron microscope (SEM) micrographs were obtained to evaluate if the remaining fibers had a similar quality to those of the garment prior to the selective dissolution process.

Thus, the surface of the initial textile samples was compared with the recovered textile fibers using High Resolution Scanning Electron Microscope (HR-SEM, JEOL IT700HR) operated in high vacuum mode at a voltage of 3 kV, along with Energy Dispersive X-Ray Spectroscopy (EDS) analysis. The average fibers' width was determined by comparing them to the magnified scale.

In the processes carried out on in cotton/polyester blends in which polyester was selectively dissolved, the cotton fibers (rough and with diameters between 14-20 um) seemed not to be affected by the process (Fig. 4a and Fig.4b), since they looked unaltered.

In the processes carried out on in cotton/polyester blends in which cotton was selectively dissolved, the polyester retained the same morphology (fibers with a more polished appearance than those of cotton, and diameters from 10-15 µm (Fig. 4c and Fig.4d).

Therefore, it can be concluded that the selective dissolution process does not affect the quality of the fiber that remains undissolved, this being capable of being reused without the need of any previous treatment, simply by collecting it by filtration of the solution containing the other selectively dissolved fiber.

The invention comprises the following clauses:
Clause 1. A process for the chemical separation of a textile blend, the process comprising:
   a) providing a feedstock of a textile blend comprising:
      - at least two synthetic fibers, or
      - a synthetic fiber and a cellulosic fiber;
   b) adding an alkyl phosphonium ionic liquid to the feedstock of the textile blend to obtain a mixture, and heating to selectively dissolve one of the fibers to obtain a fiber component solution and an undissolved fiber;
   c) separating the undissolved fiber by filtration; and
   d) treating the fiber component solution with an anti-solvent (particularly, water or ethanol) to obtain a precipitated fiber component;
   e) and collecting the precipitated fiber component;
   wherein the alkyl phosphonium ionic liquid is an organic salt of an alkyl phosphonium cation and an anion of an organic or an inorganic acid, the alkyl phosphonium ionic liquid having a Formula (I)

   P(R¹)₃(R²)⁺ X⁻ (I)

   wherein R¹ is a lineal C6-C16 alkyl, R² is a lineal C2-C6 alkyl, and X is the anion.
Clause 2. The process of clause 1, wherein the anion is selected from the group consisting of halide (in particular fluoride, chloride, bromide, iodide), nitrate, nitrite, phosphinate, carboxylate, sulphonate, organosulphates, organosulfonates, hydride, cyanide, hydroxide, hypochlorite, hypobromite, hypoiodite, chlorite, bromite, iodite, hydrogen sulfite, chlorate, bromate, iodate, glycolate, perchlorate, perbromate, periodate, hydrogen carbonate, hydrogen sulfate, substituted sulfates, dihydrogen phosphate, substituted phosphates, phosphonates, carboxylates, permanganate, thiocyanate, tosylate, bistriflimide ([NTf2]-), hydrogen oxalate, hydrogen sulfide, amides, substituted amides, and combinations thereof.
Clause 3. The process of clauses 1 or 2, wherein the anion is selected from selected from chloride, bromide, hydroxide, tosylate, dodecylsulfonate, dodecylbenzenesulfonate, glycolate, dicyanamide, methylsulfate, diethylphosphate, hexafluorophosphate, phosphinate, bistriflimide, tetrafluoroborate, and a carboxylate with the general structure RCOO- where R is an aliphatic alkyl chain with a carbon chain length from 1-14.
Clause 4. The process of any one of clauses 1 to 3, wherein the alkyl phosphonium cation is trihexyl(tetradecyl)phosphonium [P66614]⁺.
Clause 5. The process of claim 4, wherein the alkyl phosphonium ionic liquids is selected from the group consisting of [P66614]chloride (Cyphos 101), [P66614]decanoate (Cyphos 103), [P66614]dodecylbenzenesulfonate, [P66614]bis(2,4,4-trimethylpentyl)phosphinate (Cyphos 104), P66614]bis(trifluoromethylsulfonyl)amide, and [P66614]hexafluorophosphate.
Clause 6. The process of clause 5, wherein the alkyl phosphonium ionic liquids is selected from the group consisting of [P66614]chloride (Cyphos 101), [P66614] decanoate (Cyphos 103), and [P66614]bis(2,4,4-trimethylpentyl)phosphinate (Cyphos 104).
Clause 7. The process of any one of clauses 1 to 6, wherein the alkyl phosphonium ionic liquid is added to the textile blend in an amount from 80 wt.% to 99 wt.%, such as from 90 wt.% to 95 wt.%, related to a total amount of textile blend and alkyl phosphonium ionic liquid.
Clause 8. The process of any one of clauses 1 to 7, wherein the precipitated fiber component is collected by filtration.
Clause 9. The process of any one of clauses 1 to 8, wherein the process is carried out in the absence of an organic solvent.
Clause 10. The process of any one of clauses 1 to 9, wherein the process is carried out without carrying out a pre-treatment step.
Clause 11. T The process of any one of clauses 1 to 10, wherein the cellulosic fiber is selected from the group consisting of cotton, hemp, linen, rayon, and any combination thereof.
Clause 12. The process of any one of clauses 1 to 11, wherein the synthetic fiber is selected from the group consisting of polyester, polyamide, elastane, and acrylic.
Clause 13. The process of any one of clauses 1 to 12, wherein the textile blend comprises a cellulosic fiber and a synthetic fiber, particularly, wherein the synthetic fiber is selected from the group consisting of a polyester, a polyamide, and elastane.
Clause 14. The process of clause 13, wherein the fiber dissolved in step b) is the cellulosic fiber.
Clause 15. The process of any one of clauses 1 to 14, wherein step b) is carried out at a temperature at a temperature higher than 100 °C, such as from 140 to 170 °C.
Clause 16. The process of claim 14, further comprises a pre-treatment step of acid hydrolysis or enzymatic hydrolysis, wherein step b) is carried out at a temperature lower that 140 °C, such as from 100 °C to 60 °C, optionally under stirring, for 0,5 to 24 h, particularly for 0.5 to 5 hours or less.
Clause 17. The process of any one of clauses 14 to 16, wherein the textile blend comprises a cellulosic fiber such as cotton and polyester, the alkyl phosphonium ionic liquid is [P66614]chloride (Cyphos 101), the precipitated fiber component is a cellulosic fiber such as cotton, and the undissolved fiber is polyester.
Clause 18. The process of clause 13, wherein the fiber dissolved in step b) is other than the cellulosic fiber.
Clause 19. The process of clause 18, wherein step b) is carried out at a temperature at a temperature higher than 100 °C, such as from 140 to 170 °C.
Clause 20. The process of clauses 18 or 19, wherein the textile blend comprises a cellulosic fiber such as cotton and polyester, the alkyl phosphonium ionic liquid is [P66614]decanoate (Cyphos 103), the precipitated fiber component is polyester, and the undissolved fiber is a cellulosic fiber such as cotton .
Clause 21. The process of clauses 18 or 19, wherein the textile blend comprises a cellulosic fiber such as cotton and elastane, the alkyl phosphonium ionic liquid is [P66614]bis(2,4,4-trimethylpentyl)phosphinate (Cyphos 104), the precipitated fiber component is elastane, and the undissolved fiber is a cellulosic fiber such as cotton .
Clause 22. The process of clauses 18 or 19, wherein the textile blend comprises a cellulosic fiber such as cotton and polyamide, the alkyl phosphonium ionic liquid is [P66614]chloride (Cyphos 101), the precipitated fiber component is polyamide, and the undissolved fiber is a cellulosic fiber such as cotton .
Clause 23. The process of clauses 18 or 19, wherein the textile blend comprises a cellulosic fiber such as cotton and polyamide, the alkyl phosphonium ionic liquid is [P66614]decanoate (Cyphos 103), the precipitated fiber component is polyamide, and the undissolved fiber is a cellulosic fiber such as cotton .
Clause 24. The process of clauses 18 or 19, wherein the textile blend comprises a cellulosic fiber such as cotton, polyamide and elastane, the alkyl phosphonium ionic liquid is [P66614]bis(2,4,4-trimethylpentyl)phosphinate (Cyphos 104), the precipitated fiber component is elastane, and the undissolved fibers are a cellulosic fiber such as cotton and polyamide.
Clause 25. The process of clause 24, wherein cotton and polyamide are chemically separated according to any one of the processes defined in clause 19 or clause 20.
Clause 26. The process of clauses 18 or 19, wherein the textile blend comprises a cellulosic fiber such as cotton, polyester and elastane, the alkyl phosphonium ionic liquid is [P66614]bis(2,4,4-trimethylpentyl)phosphinate (Cyphos 104), the precipitated fiber component is elastane, and the undissolved fibers are a cellulosic fiber such as cotton and polyester.
Clause 27. The process of clause 26, wherein cotton and polyester are chemically separated according to any one of the processes defined in clause 14 or clause 15.
Clause 28. The process of clauses 18 or 19, wherein the textile blend comprises a cellulosic fiber such as cotton, polyester, polyamide, and elastane, the alkyl phosphonium ionic liquid is [P66614]bis(2,4,4-trimethylpentyl)phosphinate (Cyphos 104), the precipitated fiber component is elastane, and the undissolved fibers are a cellulosic fiber such as cotton, polyester and polyamide.
Clause 29. The process of clause 28, wherein the cellulosic fiber such as cotton, polyester, and polyamide are chemically separated by
   - adding [P66614]chloride (Cyphos 101) and heating, for instance, at a temperature from 100 °C to 170 °C under stirring for 0.5 to 30 hours, to obtain a polyamide-containing solution and an undissolved mixture of a cellulosic fiber such as cotton and polyester;
   - separating the undissolved mixture of a cellulosic fiber such as cotton and polyester by filtration:
   - treating the polyamide-containing solution with an anti-solvent to recover a precipitated polyamide fiber;
   - chemically separating the undissolved mixture of a cellulosic fiber such as cotton and polyester by carrying out the process defined in clauses 14 or 15.
Clause 30. The process of any one of clauses 1 to 11, wherein the textile blend comprises at least two synthetic fibers.
Clause 31. The process of clause 30, wherein the at least two synthetic fibers are selected from the group consisting of a polyester fiber, a polyamide fiber, and elastane.
Clause 32. The process of claim 31, wherein the textile blend comprises polyester and elastane, the alkyl phosphonium ionic liquid is [P66614]bis(2,4,4-trimethylpentyl)phosphinate (Cyphos 104), the precipitated fiber component is elastane, and the undissolved fiber is polyester.
Clause 33. The process of claim 31, wherein the textile blend comprises polyamide and elastane, the alkyl phosphonium ionic liquid is [P66614]bis(2,4,4-trimethylpentyl)phosphinate (Cyphos 104), the precipitated fiber component is elastane, and the undissolved fiber is polyamide.
Clause 34. The process of claim 31, wherein the textile blend comprises polyester and polyamide, the alkyl phosphonium ionic liquid is [P66614]chloride (Cyphos 101), the precipitated fiber component is polyamide, and the undissolved fiber is polyester.
Clause 35. The process of claim 31, wherein the textile blend comprises polyester, polyamide and elastane, the alkyl phosphonium ionic liquid is [P66614]bis(2,4,4-trimethylpentyl)phosphinate (Cyphos 104), the precipitated fiber component is elastane, and the undissolved fibers are polyester and polyamide.
Clause 36. The process of clause 35, wherein polyester and polyamide are chemically separated according to the process defined in clause 28.
Clause 37. The process of any one of clauses 1 to 36, wherein the process is to recycling textile waste.
Clause 38. The process of any one of clauses 1 to 37, further comprising transforming the fiber components recovered either by filtration or by precipitation into a new fiber and the manufacture of a textile with the new fiber.
Clause 39. The process of any one of clauses 1 to 37, further comprising transforming the fiber components recovered either by filtration or by precipitation into a film for packaging and/or wrapping.

### Citation List

1. De Silva, R. et al. (2014). "Recycling textiles: the use of ionic liquids in the separation of cotton polyester blends". RSC Adv., 4(55), 29094-29098;
2. Xia, G. et al. (2021). "Complete recycling and valorization of waste textiles for value-added transparent films via an ionic liquid". Journal of Environmental Chemical Engineering. 9(5), 106182;
3. Villalta, E. et al. (2022). "Recovery of Cellulose from Polyester/Cotton Fabrics Making Use of Ionic Liquids". Polymer Science: Peer Review Journal. 4(3), 1-9

## Claims

1. A process for the chemical separation of a textile blend, the process comprising:
a) providing a feedstock of a textile blend comprising:
- at least two synthetic fibers, or
- a synthetic fiber and a cellulosic fiber;
b) adding an alkyl phosphonium ionic liquid to the feedstock of the textile blend to obtain a mixture, and heating the mixture to selectively dissolve one of the fibers to obtain a fiber component solution and an undissolved fiber;
c) separating the undissolved fiber by filtration; and
d) treating the fiber component solution with an anti-solvent to obtain a precipitated fiber component;
e) and collecting the precipitated fiber component;
wherein the alkyl phosphonium ionic liquid is an organic salt of an alkyl phosphonium cation and an anion of an organic or an inorganic acid, the alkyl phosphonium ionic liquid having a Formula (I)
P(R¹)₃(R²)⁺ X⁻ (I)
wherein R¹ is a lineal C6-C16 alkyl, R² is a lineal C2-C6 alkyl, and X is the anion.

2. The process of claim 1, wherein the anion is selected from selected from chloride, bromide, hydroxide, tosylate, dodecylsulfonate, dodecylbenzenesulfonate, glycolate, dicyanamide, methylsulfate, diethylphosphate, hexafluorophosphate, phosphinate, bistriflimide, tetrafluoroborate, and a carboxylate with the general structure RCOO- where R is an aliphatic alkyl chain with a carbon chain length from 1-14.

3. The process of claims 1 or 2, wherein the alkyl phosphonium cation is trihexyl(tetradecyl)phosphonium [P66614]⁺.

4. The process of claim 3, wherein the alkyl phosphonium ionic liquids is selected from the group consisting of [P66614]chloride (Cyphos 101), [P66614]decanoate (Cyphos 103), [P66614]dodecylbenzenesulfonate, [P66614]bis(2,4,4-trimethylpentyl)phosphinate (Cyphos 104), P66614]bis(trifluoromethylsulfonyl)amide, and [P66614]hexafluorophosphate.

5. The process of any one of claims 1 to 4, wherein the alkyl phosphonium ionic liquid is added to the textile blend in an amount from 80 wt.% to 99 wt.% related to a total amount of textile blend and alkyl phosphonium ionic liquid.

6. The process of any one of claims 1 to 5, the process is carried out in the absence of an organic solvent.

7. The process of any one of claims 1 to 6, wherein the textile blend comprises a cellulosic fiber and a synthetic fiber.

8. The process of claim 7, wherein the fiber dissolved in step b) is the cellulosic fiber.

9. The process of any one of claims 1 to 8, wherein step b) is carried out at a temperature at a temperature higher than 100 °C.

10. The process of claim 8, further comprising a pre-treatment step of acid hydrolysis or enzymatic hydrolysis, wherein step b) is carried out at a temperature lower that 140 °C.

11. The process of claim 8, wherein the textile blend comprises a cellulosic fiber and polyester, the alkyl phosphonium ionic liquid is [P66614]chloride (Cyphos 101), the precipitated fiber component is the cellulosic fiber, and the undissolved fiber is polyester; or
wherein the textile blend comprises a cellulosic fiber and polyester, the alkyl phosphonium ionic liquid is [P66614]decanoate (Cyphos 103), the precipitated fiber component is polyester, and the undissolved fiber is the cellulosic fiber;
or
wherein the textile blend comprises a cellulosic fiber and elastane, the alkyl phosphonium ionic liquid is [P66614]bis(2,4,4-trimethylpentyl)phosphinate (Cyphos 104), the precipitated fiber component is elastane, and the undissolved fiber is the cellulosic fiber;
or
wherein the textile blend comprises a cellulosic fiber and polyamide, the alkyl phosphonium ionic liquid is [P66614]chloride (Cyphos 101), the precipitated fiber component is polyamide, and the undissolved fiber is the cellulosic fiber;
or
wherein the textile blend comprises a cellulosic fiber and polyamide, the alkyl phosphonium ionic liquid is [P66614]decanoate (Cyphos 103), the precipitated fiber component is polyamide, and the undissolved fiber is the cellulosic fiber;
or
wherein the textile blend comprises a cellulosic fiber, polyamide and elastane, the alkyl phosphonium ionic liquid is [P66614]bis(2,4,4-trimethylpentyl)phosphinate (Cyphos 104), the precipitated fiber component is elastane, and the undissolved fibers are the cellulosic fiber and polyamide;
or
wherein the textile blend comprises a cellulosic fiber, polyester and elastane, the alkyl phosphonium ionic liquid is [P66614]bis(2,4,4-trimethylpentyl)phosphinate (Cyphos 104), the precipitated fiber component is elastane, and the undissolved fibers are the cellulosic fiber and polyester;
or
wherein the textile blend comprises a cellulosic fiber, polyester, polyamide, and elastane, the alkyl phosphonium ionic liquid is [P66614]bis(2,4,4-trimethylpentyl)phosphinate (Cyphos 104), the precipitated fiber component is elastane, and the undissolved fibers are the cellulosic fiber, polyester and polyamide.

12. The process of any one of claims 1 to 5, wherein the textile blend comprises at least two synthetic fibers selected from the group consisting of a polyester fiber, a polyamide fiber, and elastane.

13. The process of claim 12, wherein the textile blend comprises polyester and elastane, the alkyl phosphonium ionic liquid is [P66614]bis(2,4,4-trimethylpentyl)phosphinate (Cyphos 104), the precipitated fiber component is elastane, and the undissolved fiber is polyester; or
wherein the textile blend comprises polyamide and elastane, the alkyl phosphonium ionic liquid is [P66614]bis(2,4,4-trimethylpentyl)phosphinate (Cyphos 104), the precipitated fiber component is elastane, and the undissolved fiber is polyamide;
or
wherein the textile blend comprises polyester and polyamide, the alkyl phosphonium ionic liquid is [P66614]chloride (Cyphos 101), the precipitated fiber component is polyamide, and the undissolved fiber is polyester;
or
wherein the textile blend comprises polyester, polyamide and elastane, the alkyl phosphonium ionic liquid is [P66614]bis(2,4,4-trimethylpentyl)phosphinate (Cyphos 104), the precipitated fiber component is elastane, and the undissolved fibers are polyester and polyamide.

14. The process of any one of claims 1 to 13, further comprising transforming the fiber components recovered either by filtration or by precipitation into a new fiber and the manufacture of a textile with the new fiber.

15. The process of any one of claims 1 to 13, further comprising transforming the fiber components recovered either by filtration or by precipitation into a film for packaging and/or wrapping.
